(19) Europäisches Patentamt
European Patent Office
Office européen des brevets

(11) Publication number: **0 556 879 A2**

(12) **EUROPEAN PATENT APPLICATION**

(21) Application number: **93107979.2**

(51) Int. Cl.[5]: **B01J 39/20**, B01J 41/14

(22) Date of filing: **29.08.89**

This application was filed on 17 - 05 - 1993 as a divisional application to the application mentioned under INID code 60.

(30) Priority: **06.09.88 US 240989**

(43) Date of publication of application: **25.08.93 Bulletin 93/34**

(60) Publication number of the earlier application in accordance with Art.76 EPC: **0 361 685**

(84) Designated Contracting States: **AT BE CH DE ES FR GB GR IT LI LU NL SE**

(71) Applicant: **ROHM AND HAAS COMPANY**
**Independence Mall West**
**Philadelphia Pennsylvania 19105(US)**

(72) Inventor: **Fries, William**
**339 Maple Avenue**
**Southampton, Pennsylvania 18966(US)**
Inventor: **Naples, John Otto**
**2603 North Elsea Smith Road**
**Buckner, Missouri 64016(US)**

(74) Representative: **Tanner, James Percival et al**
**ROHM AND HAAS (UK) LTD. European Operations Patent Department Lennig House**
**2 Mason's Avenue**
**Croydon CR9 3NB (GB)**

(54) **Ion exchange resins.**

(57) Ion exchange resin particles bearing ion exchange groups only in the most accessible portions of the particles possess kinetic advantages over fully functionalized resins in continuous-flow treatment of fluids. The ion exchange resin particles comprise crosslinked copolymer in which from 68% to 98% of the available functionalizable sites are functionalized with ion exchange functional groups, and the remaining, unfunctionalized, available functionalizable sites are those sites least accessible to diffusion, and wherein the ion exchange functional groups are other than strong acid cation exchange functional groups.

EP 0 556 879 A2

This invention is concerned with partially functionalized ion exchange resins, a process for making such resins, and the use of such resins in chromatographic separations and ion exchange processes.

The kinetic advantage of a resin having a short diffusion path has long been recognized in the ion exchange art; it allows rapid access to ion exchange sites located within a resin bead, and a more rapid approach to equilibrium during column treatment of fluids. Early attempts at producing ion exchange resins with superior kinetics involved reducing the size of resin particles, but such an approach quickly leads to excessive pressure drop across a bed of fine particles. The macroreticular resins of Meitzner et al, U.S.-A-4,224,415 were another approach to improved kinetics; large pores in the resin beads permitted ready access to the interior of the resin, where diffusion required only a short path to reach active exchange sites. Such resins have a lower ion exchange capacity per unit volume than gel resins, and require a more complex manufacturing process. Even these resins possess relatively inaccessible exchange sites.

Others have produced heterogeneous beads of copolymer surrounding inert central cores, as of glass or a different, inert copolymer. In general, such heterogeneous beads suffer from excessive breakage during functionalization and use. The reason for this breakage is that the ion exchange resin shell swells as it becomes wetted with water, and changes dimension significantly during the changes in ionic form that accompany loading and regeneration cycles. As the inert core tends not to participate in such dimensional changes, the particle becomes severely stressed at the interface between the core and the functionalized polymer, and tends to fracture. Radiation post-grafting can strengthen such particles, but it is an additional, costly process, and the additional crosslinking it introduces would tend to retard the desired internal diffusion.

Strongly acidic cation exchange resins commonly are functionalized with sulfonic acid exchange sites. Techniques for sulfonating ion exchangers have evolved from early studies of various organic materials. When spherical copolymer beads produced by suspension polymerization came to be the preferred carriers of ion exchange functionality, it was found that they could not be practically sulfonated merely by heating them with concentrated sulfuric acid; the beads broke during the subsequent quench of the acid, and any beads that survived were highly stressed and would tend to break in use during the stress of the loading and regeneration cycle. This problem was solved by swelling the beads with an organic solvent, which allowed the sulfuric acid to easily and uniformly penetrate the beads. Stress induced during sulfonation and quenching was easily relieved in the swollen copolymer, and the resulting sulfonated beads were satisfactory in their resistance to breakage. Variations of solvent-swollen sulfonation became the industry standards for producing strongly acidic ion exchange resins.

It is well known that sulfuric acid sulfonation proceeds from the outside surface inward on a homogeneous aromatic copolymer particle and that the reaction can be stopped before the particle has been completely sulfonated, merely by quenching it with water before the acid has fully penetrated the particle. The resulting particle has a sulfonated, hydrophilic outer shell and an unsulfonated, hydrophobic inner core. The stress problems encountered with sulfonation in the absence of solvent were magnified by this combination in the partially sulfonated bead, because the sulfonated outer shell swells in use in aqueous liquids at a different rate from the unsulfonated core. Solvent swelling the copolymer beads prior to partial sulfonation reduces the initial stress in the beads, and Hansen et al., U.S.-A-3,252,921 observed an increase in bead stability when a thin outer shell of solvent-swollen beads was sulfonated with chlorosulfonic acid or sulfur trioxide. The Hansen reference taught that sulfonation of more than 65% of the available aryl nuclei was deleterious to the stability of the bead, and taught a useful range for sulfonation of 8 to 65% of the available aryl nuclei. From the geometry of a sphere one can readily see that the thickness of the outer shell would be about 3 to 30% of the bead radius with such a range of sulfonation.

We have now developed physically stable ion exchange resin particles which bear their ion exchange functionality only in the portion of the particle most readily accessible to diffusion.

The present invention provides ion exchange resin particles comprising crosslinked copolymer in which from 68% to 98% of the available functionalizable sites are functionalized with ion exchange functional groups, and the remaining, unfunctionalized, available functionalizable sites are those sites least accessible to diffusion.

The invention also encompasses a process for exchanging ions between a liquid containing dissolved ions and an ion exchange resin, which comprises passing the liquid through a bed of the ion exchange resin at a rate faster than that which will permit diffusion equilibrium in a fully functionalized resin of the same particle, wherein the ion exchange resin is a resin as defined above.

The ion exchange resins of the present invention include strongly and weakly acidic cation exchange resins, strongly and weakly basic anion exchange resins and chelating resins; any of these resins may have the physical form of gel beads, e.g. spherical gel beads, or macroporous beads, including macroreticular beads, or comminuted resin particles which are gel or macroporous resin. Such comminuted particles may

be derived from bulk-polymerized or suspension-polymerized polymers using known comminution techniques. Also contemplated within the scope of the present invention are resins of mixed functionality, including amphoteric resins. One desirable form of functionalization is sulfonation, and the present invention is capable of providing partially sulfonated resins which are significantly better able to withstand the stress of the loading and regeneration cycle in aqueous ion exchange applications than resins formed by sulfonating conventional copolymers either in the solvent-swollen or non-swollen state.

Preferred ion exchange resin particles are those prepared by functionalizing crosslinked, suspension-polymerized copolymer beads which are well known in the art as precursors for ion exchange resins. Gel copolymer beads functionalized according to the present invention bear their functional groups in an outer shell of uniform depth. Because the functionalization processes used to prepare these beads penetrate the copolymer at a uniform rate, the thickness of the functionalized layers tends to be uniform for all beads regardless of bead size, provided only that the smallest beads are not completely functionalized e.g. not completely sulfonated. As a result, the diffusion paths are highly uniform, regardless of the uniformity of bead size.

In one embodiment of the present invention the ion exchange functional groups are cation or anion exchange groups which are in an outer layer of the particle, the average depth of the layer being from about 0.32 to about 0.75 times the total radius of the particle.

The properties of short and uniform diffusion paths with little reduction in volume capacity possessed by the particles of the invention provide superior ion exchange kinetics when compared with conventional, fully functionalized particles. These properties make the particles of the present invention particularly well suited for such applications as chromatographic separations, especially preparative-scale separations. Additionally, the ion exchange resins of the present invention can have enhanced oxidative stability and crush resistance when compared to fully functionalized resins, as well as significantly shorter, uniform diffusion paths.

The unique morphology of the resin particles of the present invention means that they are generally inhomogeneous in composition and inhomogeneous in relative swelling rate in ion-containing liquids. This causes high stress at the sites of inhomogeneity during use; strong copolymer particles are therefore especially preferred, such as the copolymer beads described by Howell in US-A-4,431,785 and 4,283,449, or by Dales in US-A-4,192,921 which are hereby incorporated into the present specification by reference.

In the resin particles of the present invention from about 68% to about 98% of the copolymer sites available for functionalization are actually functionalized. A highly useful range of functionalization levels is from about 70% to about 95% of the available sites, and particularly from about 70 to about 90% of the available sites. In the case of spherical gel particles, the depth of the functionalized shell may be calculated readily from the functionalization level using the geometry of the spherical bead. Thus the functionalization level is

$$\frac{V_s}{V_t} \times 100$$

where $V_s$ is the volume of the functionalized shell, and $V_t$ is the total volume of the bead. $V_t = 4/3\ \pi\ r_t^3 = 4.189\ r_t^3$ where $r_t$ is the total radius of the bead. $V_s = V_t - V_c$, where $V_c$ is the volume of the unfunctionalized core. The functionalization level then becomes

$$\frac{V_t - V_c}{V_t} \times 100$$

$$= \frac{4.189\ (r_t^3 - r_c^3)}{4.189\ r_t^3} \times 100$$

$$= \frac{r_t^3 - r_c^3}{r_t^3} \times 100$$

where $r_t$ is the total radius of the bead and $r_c$ is the radius of the unfunctionalized core. If $r_t$ is taken as 1, then the functionalization level becomes $(1 - r_c^3) \times 100$. Thus where the core radius is 0.27 the functionalization level is (1 - 0.020) x 100 = 98% and the shell depth is 1 - 0.27 = 0.73$r_t$. Correspondingly, when the core radius is 0.68 the functionalization level is (1 - 0.31) x 100 = 69% and the functionalized shell depth is 1 - 0.68 = 0.32 $r_t$. Comparison of ion exchange capacity with microscopically observed shell depth confirms this relationship.

Monomers suitable for preparing crosslinked copolymer beads are well known in the art. Suitable monomers include monovinyl aromatic monomers, for example, styrene, vinyltoluene, vinyl naphthalene, ethyl vinyl benzene, vinyl chlorobenzene, chloromethylstyrene and the like, which may comprise from about 50 to about 99.5 mole percent, preferably 80 to about 99 mole percent, of the monomers from which the copolymer is made, and polyvinyl monomers having at least two active vinyl groups polymerizable with the monovinyl monomer, which may comprise from about 0.5 to about 50 mole percent, preferably from 1 to about 20 mole percent, of the monomers from which the copolymer is made. Examples of suitable polyvinyl monomers include divinylbenzene, trimethylolpropane trimethacrylate, ethylene glycol dimethacrylate, divinyltoluene, trivinylbenzene, divinylchlorobenzene, diallyl phthalate, divinylpyridine, divinylnaphthalene, ethylene glycol diacrylate, neopentyl glycol dimethacrylate, diethylene glycol divinyl ether, bisphenol-A-dimethacrylate, pentaerythritol tetra- and trimethacrylates, divinyl xylene, divinylethylbenzene, divinyl sulfone, divinyl ketone, divinyl sulfide, allyl acrylate, diallyl maleate, diallyl fumarate, diallyl succinate, diallyl carbonate, diallyl malonate, diallyl oxylate, diallyl adipate, diallyl sebacate, diallyl tartrate, diallyl silicate, diallyl tricarballylate, triallyl aconitate, triallyl citrate, triallyl phosphate, N, N'-methylene-diacrylamide, N,N'-methylene-dimethacrylamide, N,N'-ethylenediacrylamide, trivinyl naphthalene, polyvinylanthracenes and the polyallyl and polyvinyl ethers of glycol, glycerol, pentaerythritol, resorcinol, and the monothio and dithio derivatives of glycols. The monomer mixture may also contain up to about 5 mole percent of other vinyl monomers which do not affect the basic nature of the resulting resin matrix, for example, acrylonitrile, butadiene, methacrylic acid and others known in the art. In one embodiment of the invention, the copolymer particles are acrylic ester copolymer particles.

Both the gel polymerization and the macroreticular polymerization are well-known techniques for making copolymer particles as intermediates for ion exchange resins. Preferred are suspension polymerization techniques which produce copolymer beads in the range of from about 10 µm to about 2mm, and more preferably from about 25 µm to about 1mm; these techniques are similarly well-known.

Polymerization of the high-strength copolymers, useful in preparing the resins of the present invention, is characterized by polymerizing the above-described monomers in the presence of a free-radical initiator and oxygen at a reaction temperature from about 30° to about 95°C, preferably 50° to about 70°C, the free-radical initiator being suitable for catalyzing polymerization at such temperatures, or in the presence of such an initiator and a reaction rate moderator, the moderator being an organic compound containing acetylenic or allylic unsaturation, said compound being capable of moderating the rate of polymerization, as for example, phenylacetylene, terpinolene, bicycloheptadiene, dimethyloctatriene, dimer of cyclopentadiene,

dimer of methylcyclopentadiene, terpenes, 2-methylstyrene, alpha-methylstyrene dimer, limonene, cyclohexadiene, methylcyclohexadiene, camphene, geraniol, farnesol, 2-norbornene, cyclododecatriene, cyclohexadiene, cyclododecane, allylbenzene, 4-vinyl-1-cyclohexene, and the like, or in the presence of a peroxy initiator having the formula

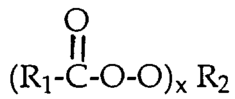

wherein $R_1$ is a branched alkyl of 3 to 12 carbon atoms and having a secondary or tertiary carbon linked to the carbonyl group and x is a positive integer having a value of either 1 or 2 and where x is 1, $R_2$ is a branched alkyl radical containing a tertiary carbon attached to the oxygen and where x is 2, $R_2$ is an alkylene or aralkylene in either case terminating in tertiary carbons attached to the oxygen, or of the formula

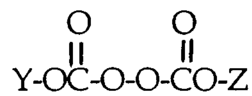

wherein Y and Z are independently selected from lower alkyl, cycloalkyl, alkyl-substituted cycloalkyl and aralkyl. Additional description of the preparation of the copolymers may be found in the above-incorporated U.S. Patents.

The process by which the resins of the present invention may be prepared comprises treating crosslinked, copolymer particles with a functionalizing reagent under conditions such that the functionalization reaction proceeds at a more rapid rate than the rate of diffusion of the functionalizing reagent into the particles, and halting the functionalization reaction when at least 68% to 98% of the available functionalizable sites are functionalized. One practical level of functionalization occurs when from about 70 to about 98% of the available sites are functionalized; at other times one may prefer that up to about 95% are functionalized, and at still other times one may prefer that up to about 90% are functionalized. For example, when the copolymer particles are gel copolymer particles, the functionalization may be halted when the depth of functionalization is from 0.32 to about 0.75 times the average radius of the particles.

Under such reaction conditions the diffusion rate may be considered the limiting rate for the reaction. The reagent functionalizes all of the available functionalizable sites it first contacts before diffusing farther into the particle and contacting a new, deeper population of available functionalizable sites.

For example, in the case of amination of halomethylated copolymer, while diffusion of the amination reagent into the copolymer is relatively rapid, the amination reaction itself if almost instantaneous, so diffusion is the rate-limiting process. Because both processes occur relatively rapidly, monitoring of the diffusion depth during the reaction is impractical, but the amination reaction is virtually quantitative and the amination may be controlled by controlling the amount of amination reagent added to the reaction mixture. All the readily available sites will aminate as the reagent diffuses deeper into the particle, and the reaction will cease when it has diffused deep enough to use all the introduced amine, leaving an unaminated inner core.

Correspondingly, carboxylic-acid-functionalized resins of the present invention may be prepared by hydrolyzing an ester copolymer, for example by hydrolyzing an acrylic ester with a strongly alkaline reagent. The hydrolysis is not as rapid a reaction as the above-discussed amination, but the diffusion rate is even slower, and thus it remains the limiting process. As is illustrated by this discussion, one skilled in the art can select a particular functionalization reaction, and conditions for that reaction, in which the diffusion rate is the limiting reaction rate; before the particles are fully functionalized the progress of the reaction may be halted, or the functionalization reagent may be exhausted, and ion exchange resins of the present invention will result.

The copolymer beads may be functionalized with any ion exchange functional groups, so long as the distribution of functionalized sites is as described. Specifically contemplated functional groups include strongly and weakly acidic cation exchange groups and strongly and weakly basic anion exchange groups. Other functional groups specifically contemplated are chelating groups such as iminodiacetate, amidoxime, iminobis methylene phosphonate, hydroxamate, polyamine, salicylate, hydroxyquinoline and the phosphonate, hydroxamate, polyamine, salicylate, hydroxyquinoline and the like.

In the case of anion exchange resins, two-step functionalization reactions are frequently employed. Active sites are formed by haloalkylating the copolymer beads, and the active sites are subsequently aminated to form the anion exchange resin. In any such multi-step functionalization, including those which produce resins other than anion exchange resins, any step may be carried out under conditions that cause the diffusion rate to be the limiting rate for the reaction occurring in that step. If the haloalkylation is conducted under such conditions, then the resulting intermediate, having a haloalkylated outer portion and an unfunctionalized inner region, may be fully aminated, yet it will still possess the desired characteristics of the resin of the present invention. Similarly, a fully haloalkylated intermediate copolymer may be aminated under such diffusion-limited conditions to produce a resin of the present invention. Other reactions known to those skilled in the art may be used to prepare the anion exchange resins of the present invention, so long as the diffusion rate is the reaction-limiting rate; for example, direct aminomethylation of aromatic copolymer particles using polar arylaminomethylating reagents such as N-methylolformamide or N-methylolacetamide, followed by hydrolysis of the polymer to remove the acyl groups, is a suitable process because the polar reagent is not miscible with the copolymer, and thus penetrates no farther into the particle than the functionalized copolymer interface.

To prepare strongly acidic cation exchange resins of the present invention, the above copolymers may be sulfonated in the absence of any swelling solvent, and in the presence of strong sulfuric acid solutions or mixtures of sulfuric with other non-swelling sulfonating agents. Consistent with the above description of the manner in which this process occurs, the sulfonation reaction is quite rapid, while the diffusion of sulfuric acid into unswollen copolymer is relatively very slow, hence the progress of the reaction is controlled by the diffusion rate. The sulfonation is quenched by the addition of a large excess of water to the mixture of acid and copolymer particles when the desired sulfonation depth has been reached. Because the sulfonated outer layer and the unsulfonated inner core of the resin tend to have different refractive indices, the interface between them may be visually observed in many transparent beads as a visible irregular interface when viewed in normal light under a microscope. Often this interface appears as a highly irregular band concentric to the bead centre. Because of this irregularity, the depth of the outer, sulfonated layer is taken to be the distance between the outer bead surface and the average penetration of sulfonation into the bead.

The following examples are intended to illustrate but not limit the invention. All percentages and proportions are by weight unless otherwise indicated, and all reagents are of good commercial quality unless otherwise indicated.

## Example 1

This Example sets forth a general procedure by which gel copolymer beads may be sulfonated to produce strong-acid, cation-exchange resins according to the present invention. A 20-gram portion of dry, gel copolymer beads is added to a round-bottom flask containing 100-200 ml of concentrated sulfuric acid. The flask contents are heated to 120 °C while stirring. The degree of sulfonation of the beads is monitored by withdrawing bead samples from the flask, quenching them and examining them microscopically. When the desired degree of sulfonation is reached, as evidenced by the depth of the visible sulfonated region of the bead, the flask contents are quenched by adding a series of increasingly dilute sulfuric acid solutions to the flask, draining the liquid from the beads after each addition, and finally washing the resulting sulfonated beads with water. The major variables in this procedure are the particle size and crosslinker content of the copolymer beads, and the sulfonating reagent, its concentration, the sulfonation temperature and time. These variables are indicated where appropriate for specific Examples below.

## Example 2

This Example sets forth a general procedure for sulfonating macroreticular copolymer beads to produce strong-acid, cation-exchange resins according to the present invention. A 20-gram (dry basis) portion of water-wet gel copolymer beads is transferred to a round-bottom flask. To the beads is added 100-200 ml of concentrated sulfuric acid to remove water; this acid is drained and 225 ml of fresh, concentrated sulfuric acid is added to the flask. The flask contents are heated to about 140 °C while stirring, and the degree of sulfonation of the beads is monitored by withdrawing bead samples and either determining their density or rapidly quenching them in water and examining them visually for the formation of a peeling shell. When the desired degree of sulfonation is reached, the flask contents are quenched by adding a series of increasingly dilute sulfuric acid solutions to the flask, draining the liquid from the beads after each addition, and finally washing the beads in water. The actual depth of sulfonation in the macroreticular bead may not be determined by visual inspection, as may be done with the gel beads, because the macropores in the beads

give the functionalizing reagent more ready access to the bead interior than gel beads. Consequently, the most accessible functionalization sites are not necessarily closest to the surface of the beads. Therefore, the degree of functionalization must be inferred from the cation exchange capacity of the resin, or the actual distribution of the sulfonate groups within the resin bead may be determined by transmission electron microscopy of a bead section.

The variables in the process of Example 2 are the same as those of Example 1, and are given where appropriate in the Examples below.

## Examples 3-8

These Examples illustrate the effects of varying sulfonation depth on the ion exchange kinetic performance of the resin, as indicated by the resin performance in sugar chromatography.

A series of six resins were prepared according to the procedure of Example 1 from a styrene-6% divinylbenzene copolymer having a nominal 280 µm diameter and a uniformity coefficient of 1.1. The uniformity coefficient is determined by sieve analysis of the beads; it is calculated as the ratio of the mesh size, in millimeters, of the screen upon which 40% of the sample weight is retained, to the mesh size of the screen upon which 90% of the sample weight is retained. The sulfonation was stopped at times such that the functionalization depths and functionalized depth-to-total ratio values shown in Table I were obtained. The resins were placed in six individual columns of 2.5-cm diameter and 120-cm length, taking care to avoid classification of the resin beads by size. Each column was heated to 60°C and charged with a 42% fructose-58% glucose sugar syrup having 50% solids, the charge volume being 7.5 volume percent of the resin bed volume. The syrup was eluted with deionized water at a flow rate of 0.3 bed volumes per minute, with the sugar concentration in the eluate being continuously monitored, until all the sugar had eluted. The baseline separation between the fructose and glucose peaks on the resulting chromatogram, and the maximum fructose concentration in the eluate, are shown in Table I. "% Baseline Separation" may be calculated by constructing a first line tangent to the maxima of the two chromatogram peaks for which the separation is being determined, constructing a second line perpendicular to the baseline, passing through the centre of the "valley" between the two maxima, and intersecting the first line, and measuring the distance from the first line along the second line to the baseline and to the intersection with the chromatogram curve. The calculation of % Baseline Separation becomes ((First Line to Chromatogram Curve)/(First Line to Baseline)) x 100. As may be seen from Table I, the most efficient resins for the chromatographic separation of fructose from glucose are not the most completely sulfonated ones, but rather those with intermediate sulfonation levels bearing the sulfonic groups in the outer portion of the beads.

Table I

| Example | Resin Bead Radius µm | Functionalization Depth µm | Functionalised Depth to Total Radius Ratio | Chromatograph y | |
|---|---|---|---|---|---|
| | | | | Baseline Separation % | Maximum Fructose Concentration % |
| 3 | 140 | 0 | 0.00 | 0 | -- |
| 4 | 160 | 62 | 0.39 | 45 | 11.4 |
| 5 | 161 | 72 | 0.45 | 53 | 13.0 |
| 6 | 163 | 88 | 0.54 | 63 | -- |
| 7 | 165 | 148 | 0.90 | 62 | 11.8 |
| 8 | 172 | 172 | 1.00 | 60 | 10.3 |

## Example 9

This Example compares a partially sulfonated resin of the present invention with a fully sulfonated, conventional resin for productivity in sugar chromatography. Productivity measures the grams of 90% fructose syrup obtained from the chromatographic process versus the grams of 42%-fructose syrup treated by the process. The resins used were prepared according to Example 1 using styrene-6% divinylbenzene

copolymer; resin A was a fully sulfonated, conventional resin while resin B was sulfonated to a functionalized depth-to-total radius ratio of 0.72. The results of sugar chromatography using these two resins at varying rates of sugar-syrup feed are shown in Table II.

Table II

| Sugar Syrup Feed Rate, g/liter of resin/day | 90% Fructose Produced, g/liter of resin/day | |
|---|---|---|
| | Resin A (Conventional) | Resin B (Present Invention) |
| 600 | 240 | 240 |
| 800 | 275 | 275 |
| 1000 | 240 | 275 |
| 1200 | 140 | 285 |
| 1400 | <100 | 290 |

The kinetic superiority of the resins of the present invention may be seen from these results. At lower feed rates, where diffusion equilibrium is more closely approached by both resins, each performs identically. As the feed rates increase and the diffusion kinetics become more important, the productivity of the conventional resin deteriorates while the productivity of the resin of the present invention continues to improve.

**Example 10**

This Example illustrates the advantage of the superior kinetics of the resins of the present invention in cleaning the resin of treated solutions. The resins used for this Example were prepared from copolymer of styrene-6% divinylbenzene having a mean particle size of about 350 µm and a uniformity coefficient of 1.1; they were sulfonated according to the procedure of Example 1 such that the ratio of sulfonation depth to total radius was 1.00 for Resin A (fully sulfonated), 0.72 for Resin B and 0.39 for Resin C. The resins were saturated with a 45% glucose syrup and then washed at a rate of 8 bed volumes per hour with 60 °C water. As may be seen from Table III, the resins with the thinner sulfonation radii were more easily washed of the sugar syrup.

Table III

| Resin | Minutes to Reach Indicated Sugar Concentration | | | |
|---|---|---|---|---|
| | 10% | 5% | 3% | 1% |
| A | 125 | 136 | 145 | 174 |
| B | 85 | 96 | 105 | 150 |
| C | 76 | 84 | 95 | 145 |

**Example 11**

In addition to being useful for sugar chromatography, the resins of the present invention are also useful in other ion exchange applications. This Example illustrates their use for softening water. Three resins were prepared by sulfonating a copolymer of styrene-8% divinylbenzene according to the procedure of Example 1. The resulting resins had a diameter of about 650 µm and a uniformity coefficient of about 1.6. Resin A had a functionalized depth-to-total radius ratio of 0.32, Resin B had a ratio of 0.46, and Resin C had a ratio of 1.00 (fully sulfonated, conventional resin). Each resin was packed in a 350-ml, 2.5-cm-diameter bed and was used to treat water containing 1168 ppm $CaCl_2$ at a flow rate of 0.40 bed volumes per minute. Each resin was then regenerated with NaCl brine. The cation exchange capacity of the resin that was actually used, in milliequivalents of calcium per milliliter of resin, the average leakage of calcium ions, in ppm, to breakthrough (the point at which leakage begins to rise significantly), and the regeneration efficiency (ratio of milliequivalents of cation removed from treated water to milliequivalents of regenerant passed through the

resin during regeneration, expressed as a percentage) at various levels of brine regeneration were determined and are shown in Table IV.

Table IV

| Resin | Fraction of Resin Sulfonated | Regeneration Level g/Liter of Resin | Utilized Capacity meq/ml | Regeneration Efficiency % | Mean Leakage to Breakthru ppm Ca |
|---|---|---|---|---|---|
| A | 0.69 | 56 | 0.942 | 98 | 6 |
| B | 0.87 | 56 | 0.864 | 90 | 7 |
| C | 1.00 | 56 | 0.627 | 65 | 10 |
| A | 0.69 | 80 | 0.951 | 69 | 3 |
| B | 0.87 | 80 | 0.919 | 67 | 3 |
| C | 1.00 | 80 | 0.663 | 48 | 3 |
| A | 0.69 | Full | 1.532 | -- | 0 |
| B | 0.87 | Full | 1.765 | -- | 0 |
| C | 1.00 | Full | 1.596 | -- | 0 |

As may be seen from the above results, the capacity of the resins which was actually available to participate in the cation exchange was greater in the resins of the present invention which were not fully sulfonated, even though the fully sulfonated resins contained more sulfonic groups per particle. The regeneration efficiencies of the resins of the present invention were also greater than that of the conventional, fully sulfonated resin.

## Example 12

This Example illustrates that the resins of the present invention may also be used in mixed-bed application; sulfonated resins of the present invention are used with conventional anion-exchange resins to treat water containing dissolved salt. The resulting effluent has a superior quality and the resin capacity is greater, when compared to fully sulfonated cation-exchange resins.

The resins were prepared according to Example 1 from styrene-8% divinylbenzene copolymer. They were sulfonated such that Resin A had a functionalized depth-to-total radius ratio of 0.40, Resin B had a ratio of 0.50, Resin C had a ratio of 0.63, and Resin D was a fully sulfonated, conventional cation-exchange resin (ratio = 1.00); the resins had a mean diameter of about 650 $\mu$m and a uniformity coefficient of about 1.6. Each resin was used in a 70-ml bed, mixed 1:1 with a gel, strong-base anion-exchange resin, in individual, 1-cm-diameter columns to treat water containing 595 ppm sodium chloride. At the treatment end point (a conductivity of $5 \times 10^5$ ohm-cm) treatment was stopped and the resin bed was separated and regenerated with sulfuric acid. The highest resistivity of treated water produced by each bed was recorded, as was the cation exchange capacity at $1 \times 10^6$ ohm-cm and at $5 \times 10^5$ ohm-cm, for resins regenerated to two different levels. These results are shown in Table V.

Table V

| Resin | Regeneration Level g/Liter of Resin | Flow Rate Liters/min | Highest Resistivity $10^6$ ohm/cm | Resin Cation to Indicated $1x10^6$ ohm-cm | Capacity End Point $5x10^5$ ohm-cm |
|---|---|---|---|---|---|
| A | 64 | 11.4 | 5.0 | 0.21 meq/ml | 0.26 meq/ml |
| B | 64 | 11.4 | 6.4 | 0.21 | 0.25 |
| C | 64 | 11.4 | 5.5 | 0.24 | 0.27 |
| D | 64 | 11.4 | 4.7 | 0.21 | 0.26 |
| A | Full | 19 | 5.8 | 0.32 | 0.42 |
| B | Full | 19 | 4.3 | 0.36 | 0.47 |
| C | Full | 19 | 4.0 | 0.35 | 0.46 |
| D | Full | 19 | 3.8 | 0.35 | 0.46 |

This Example illustrates that resins of the present invention made from macroreticular copolymers also show performance superior to that of conventional macroreticular resins.

Resins of the present invention were prepared from macroreticular copolymers according to the procedure of Example 2: the copolymers for Resins A and B contained 8% divinylbenzene, and the copolymers for Resins C and D contained 12% divinylbenzene. The sulfonated beads had a mean diameter of about 700 µm and a uniformity coefficient of about 1.5. Beds of 70 ml of each resin were prepared in 1-cm-diameter columns, and were loaded with aqueous 1000 ppm sodium chloride solution at a rate of 0.4 bed volumes/minute. The resins were regenerated to the indicated level with sulfuric acid. Capacity and leakage for these beds are shown in Table VI.

Table VI

| Resin | Regeneration Level, g/Liter of Resin | Functionalized Depth-to-Total Radius Ratio | Column Capacity (meq/ml) | Average Leakage (% of loading) (solution) |
|---|---|---|---|---|
| A | 64 | 1.00 | 0.75 | 53 |
| B | 64 | 0.35 | 0.89 | 39 |
| C | 64 | 1.00 | 0.85 | 44 |
| D | 64 | 0.74 | 0.97 | 45 |
| A | 128 | 1.00 | 0.90 | 38 |
| B | 128 | 0.53 | 1.30 | 29 |
| C | 128 | 1.00 | 1.30 | 34 |
| D | 128 | 0.50 | 1.35 | 23 |

As may be seen from the Table, the resins of the present invention showed a greater ion exchange capacity and lower leakage under conditions of multiple loading and regeneration cycles.

## Example 14

This Example illustrates that the swelling of resins of the present invention is smaller than that of conventional, fully functionalized resins during normal use cycles. Resins which undergo lower swelling and contraction during loading-regeneration cycles tend to have a greater long-term stability and simplify the design of operating equipment. A series of resins were made according to the procedure of Example 1 from styrene gel copolymer having the indicated level of divinylbenzene crosslinker.

The volume of the first six resin beds was determined when the resins were wet with deionized water. A 50% glucose solution was passed through the beds until they had equilibrated with the glucose solution, and the decrease in bed volume was measured. For the remaining four resins the volume of the beds was determined when the resins were wet with deionized water following treatment with 1 N hydrochloric acid and washing with water. The resins were equilibrated with 1 N sodium hydroxide solution and rinsed with water, and the decrease in bed volume was measured. Table VII shows the results of these measurements.

Table VII

| Resin | Functionalized Depth-Total Radius Ratio | Resin DVB Level, % | Cycle Treatment | Swelling % of Bed Volume |
|---|---|---|---|---|
| A | 1.00 | 6.0 | 50% glucose/ | 4.2 |
| B | 0.72 | 6.0 | d.i. water | 3.6 |
| C | 0.54 | 6.0 | " | 2.2 |
| D | 1.00 | 5.5 | " | 5.0 |
| E | 0.80 | 5.5 | " | 4.3 |
| F | 0.70 | 5.5 | " | 4.1 |
| G | 1.00 | 8.0 | 1 N NaOH/ | 8.0 |
| H | 0.40 | 8.0 | $H_2$0/1 N HCl/ | 6.0 |
| I | 0.37 | 8.0 | $H_2$0 | 2.0 |
| J | 0.26 | 8.0 | " | 0 |

This Example illustrates the preparation of anion exchange resins of the present invention, and their use in water-treatment applications.

A 70-gram portion of fully chloromethylated, styrene-2.5% divinylbenzene gel copolymer beads was transferred to a 500-ml, round-bottom flask equipped with a reflux condenser, stirrer and temperature controller. To the flask was added 150 g deionized water, 150 g saturated aqueous sodium chloride solution and 64 g (a stoichiometric excess) of aqueous trimethylamine solution; the mixture was heated with stirring to 50 °C and stirred at that temperature for 24 hours to fully aminate the resin. The beads were then washed thoroughly with deionized water. These beads were determined to have an anion exchange capacity of 4.22 meq/g, and had no visible unfunctionalized core when examined with a microscope. These fully functionalized beads represent the prior art resin; they have a functionalized depth-to-total radius ratio of 1.00. These beads are designated Resin A in Table VIII.

An 82-gram portion of fully chloromethylated styrene-25% divinylbenzene gel copolymer beads was transferred to a 500-ml, round-bottom flask equipped with a reflux condenser, stirrer and temperature controller. To the flask was added 150 g deionized water, 150 g saturated aqueous sodium chloride solution and 16.1 g (less than a stoichiometric equivalent) of aqueous trimethylamine solution. The mixture was heated with stirring to 50 °C and stirred at that temperature for three house to allow the trimethylamine to react completely. The beads were then washed thoroughly with deionized water. These beads were determined to have an anion exchange capacity of 3.86 meq/g and had a visible functionalized shell and unfunctionalized core when examined through a microscope. This sample is designated Resin B in Table VIII.

The procedure of this Example was repeated using fresh, fully chloromethylated beads as described above, except that 12.5 g of the trimethylamine solution was used. The resulting beads had a functionalized depth-to-total radius ratio of 0.26 and an anion exchange capacity of 2.22 meq/g. These beads are designated Resin C in Table VIII. Each of the resins had an average bead diameter of about 600 µm.

Resins A, B and C were placed in individual 1-cm-diameter columns to form 70-ml resin beds. An aqueous loading solution containing 1000 ppm hydrochloric acid, 50 ppm $SiO_2$ and 330 ppm fulvic acid was passed through each bed at a rate of 0.40 bed volumes per minute until a rise in $SiO_2$ leakage was observed. The resin beds were then regenerated with aqueous sodium hydroxide solution. This cycle was repeated twice more with regeneration to the indicated levels. Results are shown in Table VIII.

The columns in Table VIII headed "Foulant Regeneration" present data on the fulvic acid adsorption and regeneration. The "Adsorbed" column shows the percentage of fulvic acid in the loading solution that was adsorbed by the resin. The "Regen" column shows the percentage of adsorbed fulvic acid that was eluted during the subsequent regeneration cycle.

## TABLE VIII

| Resin | Functionalized Depth to Total Radius Ratio | Regeneration Level g/liter of Resin | Foulant Regeneration Adsorbed % | Foulant Regeneration Regen. % | Load Regenerate Cycle No. | Capacity eq/liter | Average $SiO_2$ Leakage ppm |
|---|---|---|---|---|---|---|---|
| A | 1.00 | 128 | 32 | 13 | 1 | 0.37 | ---- |
| B | 0.61 | 128 | 34 | 18 | 1 | 0.37 | ---- |
| C | 0.26 | 128 | 49 | 21 | 1 | 0.27 | ---- |
| A | 1.00 | 64 | 46 | 68 | 2 | 0.32 | 80 |
| B | 0.61 | 64 | 46 | 72 | 2 | 0.32 | 32 |
| C | 0.26 | 64 | 59 | 59 | 2 | 0.24 | 23 |
| A | 1.00 | 32 | --- | --- | 3 | 0.26 | 74 |
| B | 0.61 | 32 | --- | --- | 3 | 0.26 | 75 |
| C | 0.26 | 32 | --- | --- | 3 | 0.22 | 37 |

Resins A, B and C were also cycled between the chloride form and the hydroxide form; the volume of each resin was determined, after washing with water, in each form. The results, given in Table IX, show that the resins with shallower functionalization show less reversible swelling than fully functionalized resins.

Table IX

| Resin | Functionalized Depth-to-Total Radius Ratio | Degree of Functionalization | Swelling During Loading % of Bed Volume |
|---|---|---|---|
| A | 1.00 | 1.00 | 21.7 |
| B | 0.61 | 0.91 | 18.5 |
| C | 0.26 | 0.53 | 8.4 |

## Example 16

This Example illustrates the preparation of a weak-acid cation exchange resin of the present invention, and the use of non-amoratic copolymers in the preparation of such resins.

A 10-g portion of methylacrylate-10% divinylbenzene gel copolymer beads having a diameter of 300-850 µm was heated with stirring and held for one hour at 90 °C in 40 ml of 25% aqueous sodium hydroxide solution. The resulting beads were uncracked and unbroken, and on microscopic examination had a visible functionalized shell and unfunctionalized core, with a functionalized depth-to-total radius ratio of 0.78. The beads were effective as cation exchange resin and had a weak-acid cation exchange capacity of 3.33 meq/g at 26.9% solids.

## Claims

**1.** Ion exchange resin particles, characterised in that the particles comprise crosslinked copolymer in which from 68% to 98% of the available functionalizable sites are functionalized with ion exchange functional groups, and the remaining, unfunctionalized, available functionalizable sites are those sites least accessible to diffusion, and wherein the ion exchange functional groups are other than strong acid cation exchange functional groups.

**2.** Resin particles according to claim 1 comprising a macroreticular copolymer.

**3.** Resin particles according to claim 1 wherein the particles are gel copolymer particles.

**4.** Resin particles according to claim 3 wherein the gel copolymer particles are spherical gel copolymer particles.

**5.** Resin particles according to claim 3 or claim 4 wherein the ion exchange functional groups are cation or anion exchange groups which are in an outer layer of the particle, the average depth of the layer being from about 0.32 to about 0.75 times the total radius of the particle.

**6.** Resin particles according to any of claims 1 to 5 wherein the ion exchange functional groups are weak-acid cation exchange groups.

**7.** Resin particles according to claim 6 wherein the weak-acid cation exchange groups are carboxylic acid groups.

**8.** Resin particles according to any of claims 1 to 4 wherein the ion exchange functional groups are basic, anion exchange groups.

**9.** Resin particles according to claim 8 wherein the anion exchange groups are weak-base or strong-base anion exchange groups.

**10.** A process for making ion exchange resin particles, characterized in that the process comprises treating crosslinked copolymer particles with a functionalizing reagent under conditions such that the functionalization reaction proceeds at a more rapid rate than the rate of diffusion of the functionalizing reagent into the particles, and halting the functionalization reaction when from 68% to 98% of the available functionalizable sites are functionalized, and wherein the functionalizing reagent produces, in the crosslinked copolymer particles, ion exchange functional groups other than strong acid cation

exchange functional groups.

**11.** A process according to claim 10 wherein the copolymer particles are gel copolymer particles, and the functionalization reaction is halted when the depth of functionalization is from 0.32 to about 0.75 times the average radius of the particles.

**12.** A process according to claim 11 wherein the gel copolymer particles are spherical, gel copolymer particles.

**13.** A process according to claim 10 wherein the copolymer particles are macroreticular copolymer particles.

**14.** A process according to any of claims 10 to 13 wherein the copolymer particles are acrylic ester copolymer particles and the functionalizing reagent is a hydrolyzing reagent.

**15.** A process according to claim 14 wherein the hydrolyzing reagent is a strong acid or a strong base.

**16.** A process according to any of claims 10 to 13 wherein the copolymer particles are chloromethylated copolymer particles and the functionalizing reagent is an aminating agent.

**17.** A process for exchanging ions between a liquid containing dissolved ions and an ion exchange resin, characterized in that the process comprises passing the liquid through a bed of ion exchange particles at a rate faster than that which would permit diffusion equilibrium in a fully functionalized resin of the same particles, wherein the ion exchange resin particles are resin particles according to any of claims 1 to 9.